# EUROPEAN PATENT SPECIFICATION

(11) **EP 3 182 670 B1**
(45) Date of publication and mention of the grant of the patent: **02.02.2022**
(21) Application number: 16203666.9
(22) Date of filing: 13.12.2016
(51) Int. Cl.: H04W 12/37, H04W 12/08, H04L 29/06

(54) **DEVICE BINDING METHOD, SERVER AND RECORDING MEDIUM**
GERÄTEBINDUNGSMETHODE, SERVER UND AUFZEICHNUNGSMEDIUM
PROCÉDÉ DE LIAISON DE DISPOSITIF, SERVEUR ET SUPPORT D'ENREGISTREMENT

(30) Priority: 14.12.2015 CN 201510924049
(43) Date of publication of application: 21.06.2017
(73) Proprietor: Xiaomi Inc., Beijing 100085 (CN)
(72) Inventor: HOU, Enxing, Beijing, Beijing 100085 (CN); MENG, Deguo, Beijing, Beijing 100085 (CN); SU, Benchang, Beijing, Beijing 100085 (CN)
(74) Representative: dompatent von Kreisler Selting Werner - Partnerschaft von Patent- und Rechtsanwälten mbB

(56) References cited:
- CN-A- 104 780 155
- US-A1- 2015 282 223

## Description

### TECHNICAL FIELD

The present invention is related to the field of wireless communication technologies, and more particularly to a device binding method, recording medium and server.

### BACKGROUND

With development of wireless communication technologies, more and more WiFi (Wireless Fidelity) smart devices and Bluetooth smart devices appear in users' homes. To ensure usage security of a smart device, after the smart device accesses a network, a binding relation needs to be established between the smart device and a user identification. In this way, only the user owning the smart device can remotely operate the smart device or check its state.

In the related arts, after a smart device accesses a network, it usually needs to perform some special operations in order to bind the smart device with a user identification. For example, after the smart device accesses the network, a designated application installed in a terminal will display a binding button for binding the smart device. After a user's clicking operation on the binding button is detected, a binding request will be sent to a server. Then, the user also needs to press a physical button on the smart device for confirming the binding within a designated period, so as to trigger the smart device to send a binding confirmation message to the server. If the server receives the binding confirmation message for the binding request within the designated period, it binds the device identification of the smart device with the user identification.

In CN 104780155, a device binding method is described including the steps of receiving a binding request sent by a terminal, detecting whether the there is a record corresponding to the user account and the device identification in a server, and binding the user account and the device identification if there is a record corresponding to the user account and the device identification in the server.

In addition, US 2015/282223 A1 describes a further method for binding mobile devices with smart devices. According to the described method, a mobile device is employed to log in the server for acquiring user identification for requiring a user identification number. The mobile device fetches the information of an access point which can be identified by the first smart device, and provides the user identification number to the identified access point.

### SUMMARY

Embodiments of the present invention provide a device binding method, recording mediumm and server as defined in the independent claims to solve the problems in the related arts. Further, preferred embodiments of the present invention are defined in the depending claims.

It should be understood that both the foregoing general description and the following detailed description are only exemplary and explanatory and are not restrictive of the invention.

### BRIEF DESCRIPTION OF THE DRAWINGS

The accompanying drawings herein, which are incorporated into and constitute a part of the description, illustrate the embodiments according to the present invention and serve to explain the principles of the present invention together with the description.
Fig. 1 is a flow chart showing a device binding method according to an exemplary embodiment of the invention.
Fig. 2 is a flow chart showing a device binding method according to another example not covered by the claimed invention.
Fig. 3 is a flow chart showing a device binding method according to yet another example not covered by the claimed invention.
Fig. 4 is a flow chart showing a device binding method according to yet another exemplary embodiment of the invention.
Fig. 5 is a block diagram of a device binding server according to an exemplary embodiment of the invention.
Fig. 6 is a block diagram of a device binding apparatus according to another exemplary embodiment of the invention.
Fig. 7 is a block diagram of a device binding apparatus according to yet another example not covered by the claimed invention.
Fig. 8 is a block diagram of a device binding apparatus according to yet another example not covered by the claimed invention.
Fig. 9 is a block diagram of a device binding apparatus according to yet another example not covered by the claimed invention.
Fig. 10 is a block diagram of a device binding apparatus according to yet another exemplary embodiment of the invention.

The above accompanying drawings illustrate specific embodiments of the invention, which will be described in detail hereinafter. These drawings and description are not intended to limit the scope of the concept of the invention in any manner, but to explain the concept of the invention to those skilled in the art with reference to the specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of devices and methods consistent with aspects related to the invention as recited in the appended claims.

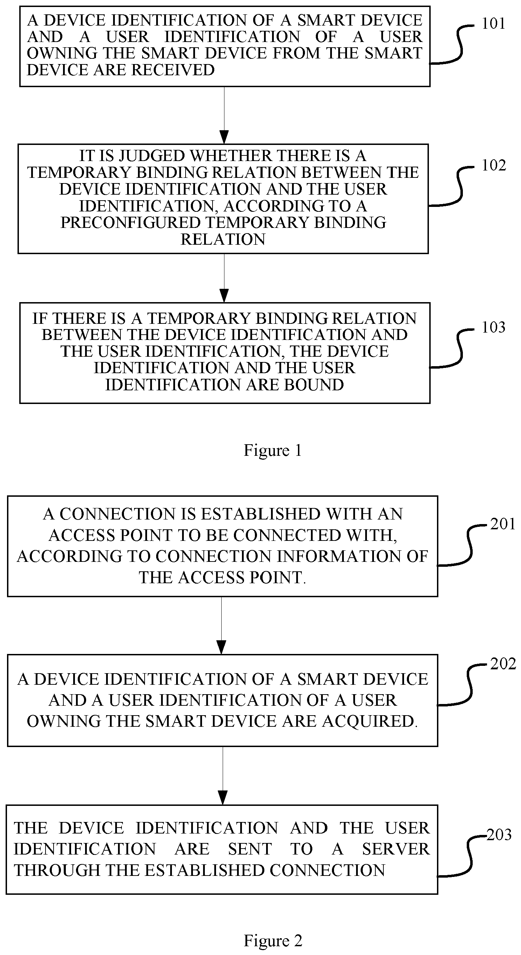

Fig. 1 is a flow chart showing a device binding method according to an exemplary embodiment of the invention. As shown in Fig. 1, the method is applied in a server and comprises the following steps 101-103.

In step 101, a device identification of a smart device and a user identification of a user owning the smart device from the smart device are received.

In step 102, it is judged whether there is a temporary binding relation between the device identification and the user identification according to a preconfigured temporary binding relation. If there is a temporary binding relation between the device identification and the user identification, step 103 is executed.

The temporary binding relation is configured by the server after the server detects a designated operation on a device transaction page.

In step 103, if there is a temporary binding relation between the device identification and the user identification, the device identification and the user identification are bound.

With the device binding method of this embodiment of this invention, after receiving a device identification of a smart device and a user identification of a user owning the smart device from the smart device, the server judges whether there is a temporary binding relation between the device identification and the user identification according to a preconfigured temporary binding relation; and if there is a temporary binding relation between the device identification and the user identification, the server binds the device identification and the user identification, wherein the temporary binding relation is configured by the server after the server detects a designated operation on a device transaction page. As the server can directly bind the device identification and the user identification according to the preconfigured temporary binding relation between the device identification and the user identification, the user does not need to perform other operations on a terminal or the smart device, thereby simplifying the binding process.

Optionally, the method further comprises: when detecting a value transfer operation associated with the smart device, displaying on the device transaction page a temporary binding triggering option for prompting temporary binding of the device identification and the user identification; and when detecting a selection of the temporary binding triggering option by the user owning the smart device, storing the temporary binding relation between the device identification and the user identification.

All the above optional technical solutions may be combined arbitrarily to form optional embodiments of this invention, which will not be described here one by one.

Fig. 2 is a flow chart showing a device binding method according to another example not covered by the claimed invention. As shown in Fig. 2, the method is applied in a smart device and comprises the following steps 201-203.

In step 201, a connection with an access point to be connected with is established according to connection information of the access point.

In step 202, a device identification of the smart device and a user identification of a user owning the smart device are acquired.

In step 203, the device identification and the user identification are sent to a server through the established connection.

The server is configured to bind the device identification and the user identification after judging that there is a temporary binding relation between the device identification and the user identification. The temporary binding relation is configured by the server after the server detects a designated operation on a device transaction page.

With the device binding method of this example not covered by the claimed invention, after establishing a connection with an access point to be connected with according to connection information of the access point, the smart device acquires a device identification of the smart device and a user identification of a user owning the smart device and sends the device identification and the user identification to the server through the established connection. After judging that there is a temporary binding relation between the device identification and the user identification, the server binds the device identification and the user identification, wherein the temporary binding relation is configured by the server after the server detects a designated operation on a device transaction page. As the server can directly bind the device identification and the user identification according to the preconfigured temporary binding relation between the device identification and the user identification, the user does not need to perform other operations on a terminal or the smart device, thereby simplifying the binding process.

Optionally, acquiring the user identification of the user owning the smart device comprises: receiving the user identification of the user owning the smart device sent by a terminal via a designated application, the designated application managing multiple detected smart devices.

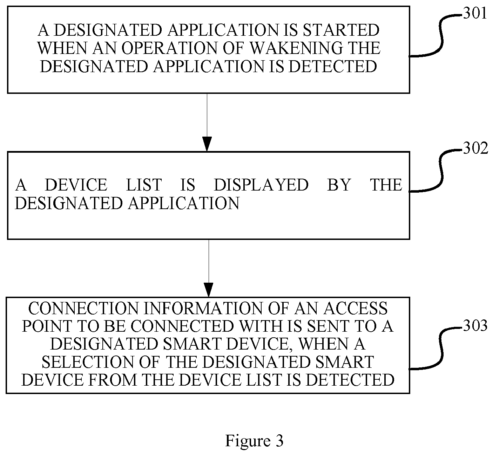

Fig. 3 is a flow chart showing a device binding method according to yet another example not covered by the claimed invention. As shown in Fig. 3, the method is applied in a terminal and comprises the following steps 301-303.

In step 301, a designated application is started, when an operation of wakening the designated application is detected.

In step 302, a device list is displayed by the designated application.

The device list includes multiple detected smart devices.

In step 303, connection information of an access point to be connected with is sent to a designated smart device, when a selection of the designated smart device from the device list is detected.

The designated smart device is configured to establish a connection with the access point according to the connection information and send a device identification of the designated smart device and a user identification of a user owning the designated smart device to a server through the established connection, so that the server binds the device identification and the user identification after judging that there is a temporary binding relation between the device identification and the user identification.

With the device binding method of this example not covered by the claimed invention, after detecting an operation of wakening the designated application, the terminal starts the designated application. A device list is displayed by the designated application. The terminal sends connection information of an access point to be connected with to a designated smart device when detecting a selection of the designated smart device from the device list, so that the designated smart device establishes a connection with the access point according to the connection information and sends the device identification of the designated smart device and the user identification of the user owning the designated smart device to a server through the established connection. Then, the server binds the device identification and the user identification after judging that there is a temporary binding relation between the device identification and the user identification, wherein the temporary binding relation is configured by the server after the server detects a designated operation on a device transaction page. As the server can directly bind the device identification and the user identification according to the preconfigured temporary binding relation between the device identification and the user identification, the user does not need to perform other operations on a terminal or the smart device, thereby simplifying the binding process.

All the above optional technical solutions may be combined arbitrarily to form optional embodiments of this invention, which will not be described here one by one.

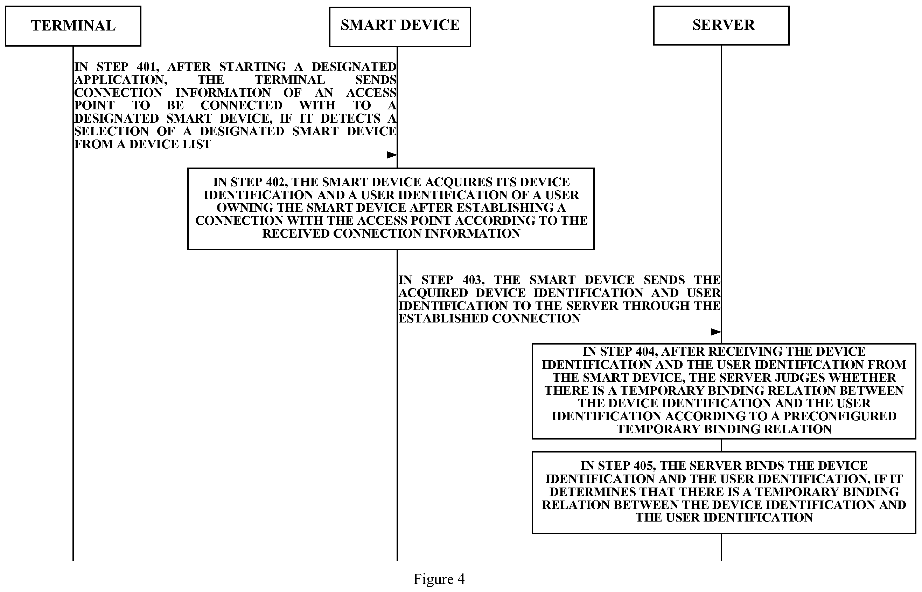

Fig. 4 is a flow chart showing a device binding method according to yet another exemplary embodiment of the invention. As shown in Fig. 4, the method comprises the following steps 401-405.

In step 401, after starting a designated application, a terminal sends connection information of an access point to be connected with to a designated smart device, if it detects a selection of a designated smart device from a device list.

In an embodiment of this invention, without specific limitation, the terminal may be a smart phone, a tablet computer or the like, and the smart device may be a smart household appliance, such as a smart refrigerator, a smart camera, a smart washing machine, a smart TV, a smart illuminating lamp. On the terminal, there is installed the designated application, such as a smart home APP (Application), configured to manage and control smart devices. The user needs to download an installation package of the designated application from a corresponding website and install the designated application on the terminal, prior to controlling the smart device by the terminal. After the user installs the designated application on the terminal, the terminal determines that an operation of wakening the application is detected, when the user clicks an application icon of the designated application or searches for the designated application via voice. Then, the terminal attempts to start the application.

After the application is started successfully, the user may input a registered user account and a password on a login interface to log in the designated application. Then, the terminal may scan for surrounding smart devices by the designated application. When a smart device is scanned, the smart device is added to a device list so as to manage the smart device. In the device list, information entries corresponding respectively to the multiple scanned smart devices are displayed. If the user wants to control a certain smart device by the designated application, the user also needs to select the smart device in the device list to connect the smart device to Internet. After the smart device connects to Internet, the terminal can control the smart device by the designated application. When detecting a selection of an information entry corresponding to a certain smart device from the device list, the terminal will acquire connection information of an access point to be connected with and send the connection information to the smart device via WIFI, a Bluetooth technology or a near field communication technology, which will be not specifically limited in this embodiment of this invention. The connection information of the access point may include a name of the access point and a connection password. The access point to be connected with may be a router, a switch or the like near the smart device and will not be specifically limited in this embodiment of this invention. For example, for a smart household appliance, the access point may be an access point provided in the home, etc.

It shall be noted that, after powered on, a smart device may send in its vicinity a broadcast message carrying the name of the smart device via a built-in Bluetooth module or a near field communication technology. If the terminal receives the broadcast message by the designated application, it determines that the smart device is scanned. The broadcast message may be a Bluetooth signal, a near field communication signal or the like and will not be specifically limited in this embodiment of this invention.

In step 402, the smart device acquires its device identification and a user identification of a user owning the smart device after establishing a connection with the access point according to the received connection information.

A smart device can be determined uniquely according to its device identification. The device identification may be an MAC (Media Access Control) address of the smart device or the like and will not be specifically limited in this embodiment of this invention. A user can be uniquely determined according to a user identification. The user identification may be a user account for the user to log in the designated application. For example, the user account may be a mail account, a phone number or the like and will not be specifically limited in this embodiment of this invention.

In an embodiment of this invention, if the smart device receives connection information of the access point to be connected with via the Bluetooth module, it establishes a connection with the access point according to the name of the access point and the connection password in the connection information. After the smart device establishes the connection with the access point, a connection success prompt may be displayed by the designated application installed in the terminal. For example, the prompt may be a text message (say, "Congratulations! A smart socket has successfully connected to the access point") or a corresponding voice prompt, and will not be specifically limited in this embodiment of this invention. Then, the terminal sends the user identification of the user owning the device to the smart device via the designated application. The user owning the device is a user who logs in the designated application. After receiving the user identification, the smart device acquires its device identification for subsequently sending both the device identification and the user identification to a server.

It shall be noted that, when sending the connection information of the access point to the smart device, the terminal may also carry therein the user identification of the user owning the device. Then, the smart device may receive the connection information and the user identification simultaneously. After establishing a connection with the access point successfully according to the connection information, the smart device directly acquires its device identification and subsequently sends the device identification and the user identification to the server.

In step 403, the smart device sends the acquired device identification and user identification to the server through the established connection.

In an embodiment of this invention, the smart device sends the acquired device identification and user identification to the server, such that the server completes binding of the user identification and the device identification. Further, the user may perform a control operation on the smart device via the designated application. Taking an example in which the smart device is a smart illuminating lamp, the user may perform operations (such as "power on", "power off' and "adjust brightness") on the smart illuminating lamp, on a control interface provided by the designated application for controlling the smart illuminating lamp.

In step 404, after receiving the device identification and the user identification from the smart device, the server judges whether there is a temporary binding relation between the device identification and the user identification according to a preconfigured temporary binding relation. If there is a temporary binding relation between the device identification and the user identification, step 405 is performed.

In an embodiment of this invention, the user may purchase the smart device on a device transaction page provided by a vendor's official website or a third-party transaction platform. For both the official website and the third-party transaction platform, transaction of the smart device can be accomplished only if the user enters a login account or a login password. The transaction process may be performed on a computer or a handset, which will not be specifically limited in this embodiment of this invention. If the user triggers a value transfer operation on the device transaction page after selecting the smart device to be purchased, it will be triggered to pay an amount of virtual currency equivalent to the purchased smart device from an E-bank account associated with the user to the vendor's account. It shall be noted that, in order to simplify the tedious process of binding the smart device and the user identification and to avoid excessive participation of the user in the device binding process, this embodiment of this invention provides a mechanism for setting a temporary binding relation during the smart device transaction stage. That is, a temporary binding triggering option may be displayed on the device transaction page. The temporary binding triggering option is configured to prompt the user to temporarily bind the device identification of the smart device to be purchased and the user identification.

The temporary binding triggering option may be a selectable button labeled with text information, say, "Intend to bind the device to the user identification". Taking an example in which the user identification is the user account, if the selectable button is selected by the user through a corresponding clicking operation, the server will temporarily bind the user account logging in the current transaction page and the device identification of the purchased device by default. In the invention, in addition to the above, the temporary binding triggering option further supports manual input of the user account to be bound. A binding information input box is added near the selectable button for prompting the user to input the user account to be bound. Then, if the selectable button is selected and information input to the binding information input box is detected, the input information in the input box is temporarily bound with the device identification. The form of the temporary binding triggering option will not be specifically limited in this embodiment of this invention.

It is to be noted that the user identification that establishes a temporary binding relation with the smart device needs to be consistent with the user identification logging in the designated application. However, the login account for the user to log in the transaction page may be consistent or inconsistent with the user identification that establishes the temporary binding relation with the smart device, which will not be specifically limited in this embodiment of this invention.

After the value transfer operation is completed, the user can acquire the ownership of the smart device. When the user clicks the temporary binding triggering option, the server determines that a selection of the temporary binding triggering option by the user is detected. Then, the server may store a correspondence between the device identification and the user identification into a temporary binding relation list. As such, after subsequently receiving a device identification device and a user identification sent by any smart, the server may search the temporary binding list to determine whether there is a temporary binding relation between the device identification and the user identification in the temporary binding relation list. If yes, it determines that there is a temporary binding relation between the device identification and the user identification, and step 405 is performed.

In step 405, the server binds the device identification and the user identification, if it determines that there is a temporary binding relation between the device identification and the user identification.

In this embodiment of this invention, after determining that there is a temporary binding relation between the device identification and the user identification sent by the smart device, the server binds the device identification and the user identification and establishes a permanent binding relation between the device identification and the user identification. After successful binding, the server may send a binding success message to the terminal. After receiving the binding success message, the terminal may display binding success information in the form of text on a display interface for the designated application, or directly output binding success information in the form of voice, which will not be specifically limited in this embodiment of this invention. After device binding is completed, the user can check the state of the smart device through a control interface of the designated application for controlling the smart device, and control the smart device. For example, after the smart camera is successfully bound, the user may check the current state (such as on/off) of the camera through a control interface of the designated application for controlling the smart camera, and perform operations on the camera (such as power on, power off, adjust photographing direction, zoom in).

It is to be noted that, if the server fails to bind the device identification and the user identification, it sends a binding failure message to the terminal. After receiving the binding failure message, the terminal may display a rebinding option on an application interface. The rebinding option may be displayed on an information entry corresponding to the smart device in the device list. The rebinding option may include text information (say, "Binding failed. Rebind or not?") and a button or a check box capable of triggering a rebinding operation, which will not be specifically limited in this embodiment of this invention.

With the device binding method of this embodiment of this invention, after establishing a connection with an access point according to connection information sent by the terminal, the smart device acquires a device identification of the smart device and a user identification of a user owning the smart device, and sends the acquired device identification and user identification to a server. The server judges whether there is a temporary binding relation between the device identification and the user identification according to a preconfigured temporary binding relation. After judging that there is a temporary binding relation between the device identification and the user identification, the server binds the device identification and the user identification, wherein the temporary binding relation is configured by the server after the server detects a designated operation on a device transaction page. As the server can directly bind the device identification and the user identification according to the preconfigured temporary binding relation between the device identification and the user identification, the user does not need to perform other operations on a terminal or the smart device, thereby simplifying the binding process.

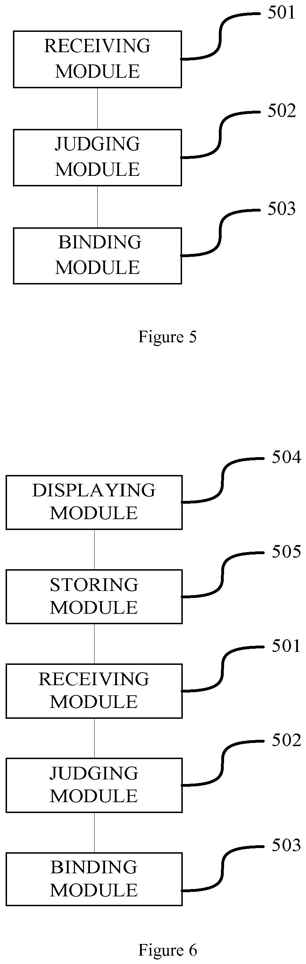

Fig. 5 is a block diagram of a device binding server according to an embodiment of the invention. As show in Fig. 5, the apparatus comprises a receiving module 501, a judging module 502 and a binding module 503.

The receiving module 501 is connected with the judging module 502 and is configured to receive a device identification of a smart device and a user identification of a user owning the smart device from the smart device. The judging module 502 is connected with the binding module 503 and is configured to judge whether there is a temporary binding relation between the device identification and the user identification according to a preconfigured temporary binding relation, wherein the temporary binding relation is configured by a server after the server detects a designated operation on a device transaction page. The binding module 503 is configured to bind the device identification and the user identification if there is a temporary binding relation between the device identification and the user identification.

Optionally, referring to Fig. 6, the apparatus further comprises: a displaying module 504 configured to, when a value transfer operation associated with the smart device is detected, display on the device transaction page a temporary binding triggering option for prompting temporary binding of the device identification and the user identification; and a storing module 505 configured to, when a selection of the temporary binding triggering option by the user owning the smart device is detected, store the temporary binding relation between the device identification and the user identification.

With the device binding apparatus of this embodiment of this invention, after receiving a device identification of a smart device and a user identification of a user owning the smart device from the smart device, it is judged whether there is a temporary binding relation between the device identification and the user identification according to a preconfigured temporary binding relation; and if there is a temporary binding relation between the device identification and the user identification, the device identification and the user identification are bound, wherein the temporary binding relation is configured by the server after the server detects a designated operation on a device transaction page. As the server can directly bind the device identification and the user identification according to the preconfigured temporary binding relation between the device identification and the user identification, the user does not need to perform other operations on a terminal or the smart device, thereby simplifying the binding process.

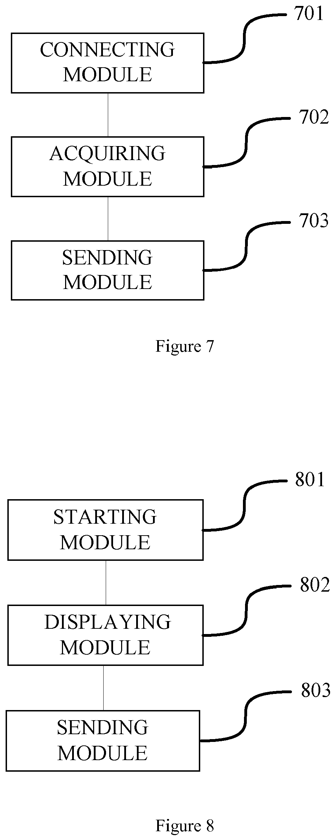

Fig. 7 is a block diagram of a device binding apparatus according to yet another example not covered by the claimed invention. As shown in Fig. 7, the apparatus comprises a connecting module 701, an acquiring module 702 and a sending module 703.

The connecting module 701 is connected to the acquiring module 702 and is configured to establish a connection with an access point to be connected with according to connection information of the access point. The acquiring module 702 is connected to the sending module 703 and is configured to acquire a device identification of a smart device and a user identification of a user owning the smart device. The sending module 703 is configured to send the device identification and the user identification to a server through the established connection, the server being configured to bind the device identification and the user identification after judging that there is a temporary binding relation between the device identification and the user identification, wherein the temporary binding relation is configured by the server after the server detects a designated operation on a device transaction page.

Optionally, the acquiring module 702 is configured to receive the user identification of the user owning the smart device sent by a terminal via a designated application, the designated application managing multiple detected smart devices.

With the device binding apparatus of this example not covered by the claimed invention, after establishing a connection with an access point to be connected with according to connection information of the access point, the smart device acquires a device identification of the smart device and a user identification of a user owning the smart device and sends the device identification and the user identification to the server through the established connection. After judging that there is a temporary binding relation between the device identification and the user identification, the server binds the device identification and the user identification, wherein the temporary binding relation is configured by the server after the server detects a designated operation on a device transaction page. As the server can directly bind the device identification and the user identification according to the preconfigured temporary binding relation between the device identification and the user identification, the user does not need to perform other operations on a terminal or the smart device, thereby simplifying the binding process.

Fig. 8 is a block diagram of a device binding apparatus according to yet another example not covered by the claimed invention. As shown in Fig. 8, the apparatus comprises a starting module 801, a displaying module 802 and a sending module 803.

The starting module 801 is connected to the displaying module 802 and is configured to start a designated application when an operation of wakening the designated application is detected. The displaying module 802 is connected to the sending module 803 and is configured to display a device list by the designated application, the device list including multiple detected smart devices. The sending module 803 is configured to send, to a designated smart device, connection information of an access point to be connected with, when a selection of the designated smart device from the device list is detected, the designated smart device being configured to establish a connection with the access point according to the connection information and send a device identification of the designated smart device and a user identification of a user owning the designated smart device to a server through the established connection, so that the server binds the device identification and the user identification after judging that there is a temporary binding relation between the device identification and the user identification.

With the device binding apparatus of this example not covered by the claimed invention, after detecting an operation of wakening the designated application, the terminal starts the designated application. A device list is displayed by the designated application. The terminal sends connection information of an access point to be connected to a designated smart device when detecting a selection of the designated smart device from the device list, so that the designated smart device establishes a connection with the access point according to the connection information and sends the device identification of the designated smart device and the user identification of the user owning the designated smart device to a server through the established connection. Then, the user binds the device identification and the user identification after judging that there is a temporary binding relation between the device identification and the user identification, wherein the temporary binding relation is configured by the server after the server detects a designated operation on a device transaction page. As the server can directly bind the device identification and the user identification according to the preconfigured temporary binding relation between the device identification and the user identification, the user does not need to perform other operations on a terminal or the smart device, thereby simplifying the binding process.

Regarding the apparatuses in the above examples, the specific manners for the respective modules to perform operations have been described in detail in the method embodiments, and will not be elaborated herein.

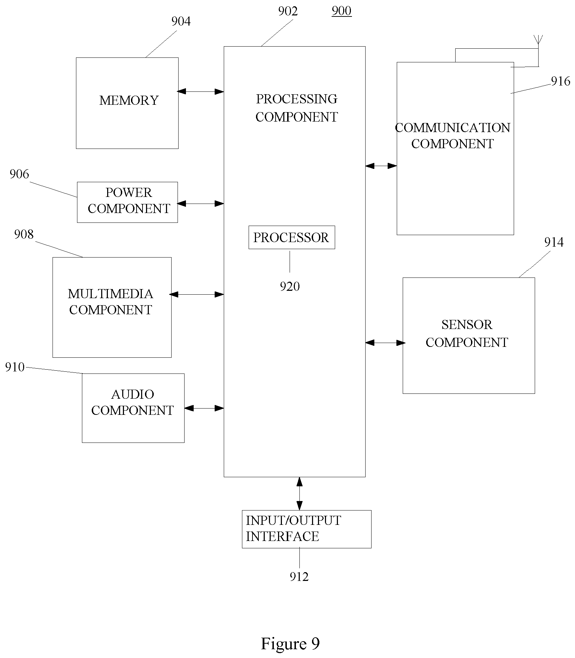

Fig. 9 is a block diagram of a device binding apparatus 900 according to yet another example not covered by the claimed invention. For example, the apparatus 900 may be a mobile phone, a computer, a digital broadcast terminal, a message transceiver device, a game console, a tablet device, medical equipment, fitness equipment, a personal digital assistant, or the like.

The apparatus 900 may comprise one or more following components: a processing component 902, a memory 904, a power component 906, a multimedia component 908, an audio component 910, an input/output (I/O) interface 912, a sensor component 914 and a communication component 916.

The processing component 902 typically controls overall operations of the apparatus 900, such as the operations associated with display, phone calls, data communications, camera operations and recording operations. The processing component 902 may include one or more processors 920 to execute instructions to perform all or part of the steps in the above described methods. Moreover, the processing component 902 may include one or more modules which facilitate the interaction between the processing component 902 and other components. For example, the processing component 902 may comprise a multimedia module to facilitate the interaction between the multimedia component 908 and the processing component 902.

The memory 904 is configured to store various types of data to support the operation of the apparatus 900. Examples of such data comprise instructions for any applications or methods operated on the apparatus 900, various kinds of data, messages, pictures, video, etc. The memory 904 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the apparatus 900. The power component 906 may comprise a power management system, one or more power sources, and any other components associated with the generation, management, and distribution of power in the apparatus 900.

The multimedia component 908 comprises a screen providing an output interface between the apparatus 900 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the apparatus 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 comprises one or more sensors to provide status assessments of various aspects of the apparatus 900. For instance, the sensor component 914 may detect an open/closed status of the apparatus 900, relative positioning of components, e.g., the display and the keypad, of the apparatus 900, a change in position of the apparatus 900 or a component of the apparatus 900, presence or absence of user's contact with the apparatus 900, an orientation or an acceleration/deceleration of the apparatus 900, and a change in temperature of the apparatus 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor or a temperature sensor.

The communication component 916 is configured to facilitate communication, wired or wirelessly, between the apparatus 900 and other devices. The apparatus 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium (for example, the memory 904) comprising instructions executable by the processor 920 in the apparatus 900 for performing the above-described methods. For example, the non-transitory computer-readable storage medium may be a ROM, a RAM, a CD-ROM, a magnetic tape, a floppy disc, an optical data storage device, and the like.

The non-transitory computer-readable storage medium have stored therein instructions that, when executed by a processor of a mobile terminal, causes the mobile terminal to perform a device binding method, comprising: starting a designated application when detecting an operation of wakening the designated application; displaying a device list by the designated application, the device list including multiple detected smart devices; sending, to a designated smart device, connection information of an access point to be connected with, when detecting a selection of the designated smart device from the device list, the designated smart device being configured to establish a connection with the access point according to the connection information and send a device identification of the designated smart device and a user identification of a user owning the designated smart device to a server through the established connection, so that the server binds the device identification and the user identification after judging that there is a temporary binding relation between the device identification and the user identification.

With the non-transitory computer-readable storage medium of this example not covered by the claimed invention, after detecting an operation of wakening the designated application, the terminal starts the designated application. A device list is displayed by the designated application. The terminal sends connection information of an access point to be connected with to a designated smart device when detecting a selection of the designated smart device from the device list, so that the designated smart device establishes a connection with the access point according to the connection information and sends the device identification of the designated smart device and the user identification of the user owning the designated smart device to a server through the established connection. Then, the user binds the device identification and the user identification after judging that there is a temporary binding relation between the device identification and the user identification, wherein the temporary binding relation is configured by the server after the server detects a designated operation on a device transaction page. As the server can directly bind the device identification and the user identification according to the preconfigured temporary binding relation between the device identification and the user identification, the user does not need to perform other operations on a terminal or the smart device, thereby simplifying the binding process.

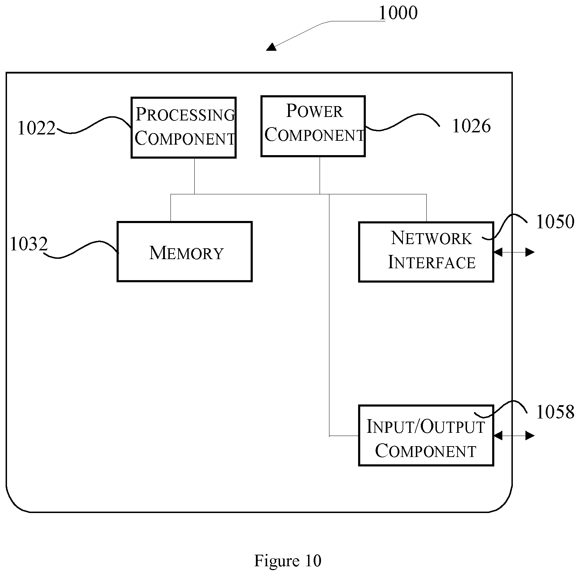

Fig. 10 is a block diagram of a device binding apparatus 1000 according to yet another embodiment of the invention. For example, the apparatus 1000 may be provided as a server. With reference to Fig. 10, the apparatus 1000 comprises a processing component 1022, which further comprises one or more processors, and storage resources represented by a memory 1032 for storing instructions executable by the processing component 1022, such as application. The application stored in the memory 1032 may include one or more modules each corresponding to a set of instructions. In addition, the processing component 1022 is configured to execute instructions, so as to perform the above mentioned methods performed by the servers in the above method embodiments.

The apparatus 1000 may also include a power source assembly 1026 which is configured to execute power management for the apparatus 1000, a wired or wireless network interface 1050 which is configured to connect the apparatus 1000 to a network, and an input/output (I/O) interface 1058. The apparatus 1000 can operate an operation system stored in the memory 1032, for example, Windows Server ^{™}, Mac OS X^{™}, Unix ^{™}, Linux ^{™}, Free BSD ^{™} or the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. The specification and examples are intended to be exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A device binding method implemented in a server, comprising:
receiving (101) a device identification of a smart device and a user identification of a user owning the smart device from the smart device;
judging (102) whether there is a temporary binding relation between the device identification and the user identification according to a preconfigured temporary binding relation, wherein the temporary binding relation is configured by the server after the server detects a designated operation for a temporary binding triggering option on a device transaction page; wherein the temporary binding triggering option has an input box added near a selectable button for prompting the user to input the user identification to be bound, if the selectable button is selected and the user identification input to the binding information input box is detected, the user identification in the input box is temporarily bound with the device identification by the server, and
if there is a temporary binding relation between the device identification and the user identification, binding (103) the device identification and the user identification.

2. The method of claim 1, further comprising:
when detecting a value transfer operation associated with the smart device, displaying on the device transaction page the temporary binding triggering option for prompting temporary binding of the device identification and the user identification; and
when detecting a selection of the temporary binding triggering option by the user owning the smart device, storing the temporary binding relation between the device identification and the user identification.

3. A server, comprising:
a processor (920); and
a memory (904) configured to store instructions executable by the processor (920), wherein the processor (920) is configured to:
receive a device identification of a smart device and a user identification of a user owning the
smart device from the smart device;
judge whether there is a temporary binding relation between the device identification and the user identification according to a preconfigured temporary binding relation, wherein the temporary binding relation is configured by the server after the server detects a designated operation for a temporary binding triggering option on a device transaction page; wherein the temporary binding triggering option has an input box added near a selectable button for prompting the user to input the user identification to be bound, if the selectable button is selected and the user identification input to the binding information input box is detected, the user identification in the input box is temporarily bound with the device identification by the server, and
if there is a temporary binding relation between the device identification and the user identification, bind the device identification and the user identification.

4. A recording medium readable by a computer and having recorded thereon a computer program including instructions for executing the steps of a device binding method according to any one of claims 1 to 2.

## Patentansprüche

1. Vorrichtungsanbindungsverfahren, das in einem Server implementiert ist und umfasst:
Empfangen (101) einer Vorrichtungsidentifikation einer intelligenten Vorrichtung und einer Benutzeridentifikation eines Benutzers, der die intelligente Vorrichtung besitzt, von der intelligenten Vorrichtung;
Beurteilen (102), ob eine temporäre Anbindungsbeziehung zwischen der Vorrichtungsidentifikation und der Benutzeridentifikation entsprechend einer vorkonfigurierten temporären Anbindungsbeziehung vorliegt, wobei die temporäre Anbindungsbeziehung durch den Server konfiguriert wird, nachdem der Server eine bestimmte Operation für eine temporäre Anbindungsauslöseoption auf einer Vorrichtungstransaktionsseite detektiert hat; wobei die temporäre Anbindungsauslöseoption ein Eingabefeld aufweist, das in der Nähe einer auswählbaren Schaltfläche hinzugefügt ist, um den Benutzer aufzufordern, die Benutzeridentifikation einzugeben, die angebunden werden soll, wobei, wenn die auswählbare Schaltfläche ausgewählt und die Benutzeridentifikationseingabe in das Anbindungsinformationseingabefeld detektiert wird, die Benutzeridentifikation in dem Eingabefeld temporär mit der Vorrichtungsidentifikation durch den Server angebunden wird, und
wenn eine temporäre Anbindungsbeziehung zwischen der Vorrichtungsidentifikation und der Benutzeridentifikation vorliegt, Anbinden (103) der Vorrichtungsidentifikation und der Benutzeridentifikation.

2. Verfahren nach Anspruch 1, das ferner umfasst:
beim Detektieren einer Wertübertragungsoperation, die mit der intelligenten Vorrichtung in Verbindung gebracht ist, Anzeigen der temporären Anbindungsauslöseoption auf der Vorrichtungstransaktionsseite, um eine temporäre Anbindung der Vorrichtungsidentifikation und der Benutzeridentifikation zu veranlassen; und
beim Detektieren einer Auswahl der temporären Anbindungsauslöseoption durch den Benutzer, der die intelligente Vorrichtung besitzt, Speichern der temporären Anbindungsbeziehung zwischen der Vorrichtungsidentifikation und der Benutzeridentifikation.

3. Server, der aufweist:
einen Prozessor (920); und
einen Speicher (904), der so ausgebildet ist, dass er durch den Prozessor (920) ausführbare Instruktionen speichert, wobei der Prozessor (920) ausgebildet ist zum:
Empfangen einer Vorrichtungsidentifikation einer intelligenten Vorrichtung und einer Benutzeridentifikation eines Benutzers, der die intelligente Vorrichtung besitzt, von der intelligenten Vorrichtung;
Beurteilen, ob eine temporäre Anbindungsbeziehung zwischen der Vorrichtungsidentifikation und der Benutzeridentifikation entsprechend einer vorkonfigurierten temporären Anbindungsbeziehung vorliegt, wobei die temporäre Anbindungsbeziehung durch den Server konfiguriert wird, nachdem der Server eine bestimmte Operation für eine temporäre Anbindungsauslöseoption auf einer Vorrichtungstransaktionsseite detektiert hat; wobei die temporäre Anbindungsauslöseoption ein Eingabefeld aufweist, das in der Nähe einer auswählbaren Schaltfläche hinzugefügt ist, um den Benutzer aufzufordern, die Benutzeridentifikation einzugeben, die angebunden werden soll, wobei, wenn die auswählbare Schaltfläche ausgewählt und die Benutzeridentifikationseingabe in das Anbindungsinformationseingabefeld detektiert wird, die Benutzeridentifikation in dem Eingabefeld temporär mit der Vorrichtungsidentifikation durch den Server angebunden wird, und
wenn eine temporäre Anbindungsbeziehung zwischen der Vorrichtungsidentifikation und der Benutzeridentifikation vorliegt, Anbinden der Vorrichtungsidentifikation und der Benutzeridentifikation.

4. Aufzeichnungsmedium, das von einem Computer lesbar ist und auf dem ein Computerprogramm aufgezeichnet ist, das Instruktionen zur Ausführung der Schritte eines Vorrichtungsanbindungsverfahrens nach einem der Ansprüche 1 bis 2 enthält.

## Revendications

1. Procédé de liaison de dispositif mis en œuvre dans un serveur, comprenant :
la réception (101) d'une identification de dispositif d'un dispositif intelligent et d'une identification de l'utilisateur d'un utilisateur propriétaire du dispositif intelligent provenant du dispositif intelligent ;
l'évaluation (102) du fait de savoir s'il existe une relation de liaison temporaire entre l'identification de dispositif et l'identification de l'utilisateur selon une relation de liaison temporaire préconfigurée, la relation de liaison temporaire étant configurée par le serveur après la détection par le serveur d'une opération désignée pour une option de déclenchement de liaison temporaire sur une page de transaction du dispositif ; l'option de déclenchement de liaison temporaire ayant une zone de saisie ajoutée à proximité d'un bouton sélectionnable pour inviter l'utilisateur à saisir l'identification de l'utilisateur à lier, si le bouton sélectionnable est sélectionné et que la saisie d'identification de l'utilisateur dans la zone de saisie des informations de liaison est détectée, l'identification de l'utilisateur dans la zone de saisie est temporairement liée à l'identification de dispositif par le serveur, et
s'il existe une relation de liaison temporaire entre l'identification de dispositif et l'identification de l'utilisateur, la liaison (103) de l'identification de dispositif et de l'identification de l'utilisateur.

2. Procédé selon la revendication 1, comprenant en outre :
lors de la détection d'une opération de transfert de valeur associée au dispositif intelligent, l'affichage sur la page de transaction du dispositif de l'option de déclenchement de liaison temporaire pour inviter une liaison temporaire de l'identification de dispositif et de l'identification de l'utilisateur ; et
lors de la détection d'une sélection de l'option de déclenchement de liaison temporaire par l'utilisateur propriétaire du dispositif intelligent, le stockage de la relation de liaison temporaire entre l'identification de dispositif et l'identification de l'utilisateur.

3. Serveur, comprenant :
un processeur (920) ; et
une mémoire (904) configurée pour stocker des instructions exécutables par le processeur (920), le processeur (920) étant configuré pour :
recevoir une identification de dispositif d'un dispositif intelligent et une identification de l'utilisateur d'un utilisateur propriétaire du dispositif intelligent provenant du dispositif intelligent ;
évaluer s'il existe une relation de liaison temporaire entre l'identification de dispositif et l'identification de l'utilisateur selon une relation de liaison temporaire préconfigurée, la relation de liaison temporaire étant configurée par le serveur après la détection par le serveur d'une opération désignée pour une option de déclenchement de liaison temporaire sur une page de transaction du dispositif ; l'option de déclenchement de liaison temporaire ayant une zone de saisie ajoutée à proximité d'un bouton sélectionnable pour inviter l'utilisateur à saisir l'identification de l'utilisateur à lier, si le bouton sélectionnable est sélectionné et que la saisie d'identification de l'utilisateur dans la zone de saisie des informations de liaison est détectée, l'identification de l'utilisateur dans la zone de saisie est temporairement liée à l'identification de dispositif par le serveur, et
s'il existe une relation de liaison temporaire entre l'identification de dispositif et l'identification de l'utilisateur, lier l'identification de dispositif et l'identification de l'utilisateur.

4. Support d'enregistrement lisible par un ordinateur et sur lequel est enregistré un programme informatique comportant des instructions pour exécuter les étapes d'un procédé de liaison de dispositif selon l'une quelconque des revendications 1 à 2.
